# EUROPEAN PATENT APPLICATION

(11) **EP 1 471 424 A1**
(43) Date of publication of application: **27.10.2004**
(21) Application number: 03252625.3
(22) Date of filing: 25.04.2003
(51) Int. Cl.: G06F 9/445

(54) **Method and apparatus for providing a minimisation profile**

(71) Applicant: Sun Microsystems, Inc., Santa Clara, California 95054 (US)
(72) Inventor: Riggs, Raymond, Hatfield, Hertfordshire AL10 8UW (GB); Walker, David, Huntingdon, Cambridgeshire PE29 6GT (GB)
(74) Representative: Potter, Julian Mark

(57) **Abstract**

An improved method and apparatus for producing a minimisation profile (60) are described. A computer system (10) and a file source (50) comprising files accessible by the computer system (10) are provided. The computer system (10) maintains a record (52) of one or more files that are accessed from the file source (50) by the computer system (10) during operation. The method comprises determining the minimisation profile (60) from the record (52). The minimisation profile (60) can identify one or more files required to support a required functionality of a computer system and the method may comprise operating the computer system (10) that maintains the record (52) in accordance with the required functionality.

## Description

The invention relates to an apparatus and method for producing a minimisation profile for a computer system.

Typically, computer systems use software files to operate. Examples of files include executable files (i.e. computer programs) and data files. In order to use files, for example to execute a file or read from and/or write to a file, a computer system is configured with the files. That is to say, files are provided so that they are accessible by the computer system, for example on a hard disk of the computer system.

Generally, a file is a computer usable entity that is capable of being manipulated on its own, for example an individual file can be moved or copied from one data store or source to another data store or source. For instance, a file can be copied from a hard disk of one computer system to the hard disk of another computer system or from a carrier medium such as a compact disk to the hard disk of a computer system.

Often, a computer system is configured with files that can support a full functionality. These files can be application files, operating system files or operating environment files, for example, and can include a combination of these. An application or application program typically provides or supports a user function and an operating system typically serves as an interface between an application and the hardware of the computer system. An operating environment typically comprises the operating system files (i.e. those files required for basic operation of the computer system), and commonly uses application files (for additional, generally useful functionality). Examples of applications include a word processor application or a web server application, examples of operating systems include DOS and UNIX and an example of an operating environment is the Solaris Operating Environment from Sun Microsystems, Inc.

Often, only some of the files are required to perform or support the operations that are actually required of a computer system in operation. That is to say, only some of the files are required support the required functionality of a computer system.

For example, a computer system may be configured with a single application. Whilst all of the files for the application may be required, only a subset of the full operating environment files may be required to support that application.

Providing additional files that support functionality that is not required is undesirable since having these additional files can make a computer system less secure. This is because a third party may be able use the additional files to obtain unauthorised access to the computer system. In other words, having additional files increases the number of potential security vulnerabilities. Often, although not always, operating system or operating environment files are used to obtain unauthorised access and providing additional files that are operating system or operating environment files is therefore particularly undesirable. Further, storing additional files in general is a waste of storage capacity. Furthermore, storing additional files increases the number of files that may need to be monitored (for security or auditing, for example), backed up, or recovered from back up media (in the event of failure of a file store, for example).

It is therefore desirable to configure a computer system with only the files that are necessary to support a required functionality. For instance, in the example given above, in terms of the operating environment files, the computer system only needs to be configured with the subset of the operating environment files that are required to support the single application.

Minimisation is the term given to the process of configuring a computer system with just the files that are necessary to support a required functionality i.e. configuring the computer system with fewer files than those required to support the full functionality. The process of minimisation can be achieved by removing files from a computer system or ensuring that only some of the files are initially configured on the system.

Minimisation is desirable in improving security on a computer system, particularly if the computer system is networked, since having fewer files reduces the number of potential security vulnerabilities. Minimisation for a computer system which is configured as a server is therefore particularly desirable.

Minimisation is typically tailored to a particular computer system, running a particular version of a particular operating system or operating environment, with a specific range of applications that are used in a specific manner. Consequently, technical support and maintenance of a minimised computer system can be difficult and this detracts from the desirability of minimisation.

A minimisation profile is a profile or list which identifies the files that are required to support a required functionality for a computer system. That is to say, the minimisation profile identifies a minimised file set which can be considered as a subset of the files which support a full functionality (typically the required functionality and further functionality). A minimisation profile can be used to minimise a computer system by configuring the computer system with only the minimised file set, for example by removing other files or by installing only the files identified in the profile.

Thus it will be appreciated that, a minimisation profile can be used by a system or service engineer to configure a customer's computer system.

Producing a minimisation profile for a computer system is difficult. However, an expert in this field can use a manual technique to produce a minimisation profile. For example, for a minimisation profile identifying operating environment files to support a single application, this could be done by painstakingly determining the file dependencies of the application to identify the operating environment files that are required to support the application. Disadvantageously, not only is this technique difficult, it requires familiarity with the application, is time-consuming and is prone to error, one consequence of which is a lack of reproducibility.

Furthermore, producing a minimisation profile to support a particular application is based on the assumption that the computer system supports a single application, but in practice it is often a customer requirement to have additional applications installed.

Further still, application dependencies can change as both the application and underlying operating system or operating environment are upgraded. This can have the effect of changing minimisation requirements, rendering a previous minimisation profile obsolete.

Thus, it will be appreciated that configuring a computer system with a minimised file set is desirable from a security point of view, but that there are several associated disadvantages. Consequently, minimisation of a computer system has not been adopted as common practice and instead security issues are presently addressed by modifying permissions, disabling services and enabling extra functionality such as auditing.

The present invention therefore seeks to provide an improved method and apparatus for producing a minimisation profile for a computer system.

Particular aspects of the invention are set out in the accompanying independent and dependent claims. Combinations of features from the dependent claims may be combined with features of the independent claims as appropriate and not merely as set out in the claims

Viewed from a first aspect, the present invention provides a method for producing a minimisation profile. A computer system and a file source comprising files accessible by the computer system are provided. The computer system maintains a record of one or more files that are accessed from the file source by the computer system during operation and the method comprises determining the minimisation profile from the record.

Viewed from another aspect, the present invention provides the use of a computer system maintained record of files that are accessed by the computer system during operation to determine a minimisation profile.

It will be appreciated that the applicant has recognised that files maintained in the record of a suitably configured computer system are the files required by the computer system during operation and that the record of these files can therefore be used to generate a minimisation profile.

By using a record to determine a minimisation profile, improved methods for the production of minimisation profiles are provided. Embodiments in accordance with aspects of the present invention can address and/or substantially mitigate one or more problems and/or disadvantages associated with producing minimisation profiles. For example, the production of minimisation profiles can be made less difficult and the need for familiarity with an application can be reduced. The production of minimisation profiles can be quicker and more efficient, less prone to error, with more reproducible results. Further, the assumption that a computer system supports a single application need no longer be relied upon and a minimisation profile for an upgraded system can be produced quickly and efficiently if required. Technical supportability can be improved by providing a support engineer with the ability to reproduce the customer's minimised system configuration. Consequently, the support engineer does not need to be familiar with the workings of the applications being used, and does not need to examine the execution of specific programs to provide support.

Suitably, the computer system comprises a recorder mechanism for including a file in the record on the condition that the file is accessed from the file source by the computer system so that during operation of the computer system, the computer system accesses one or more files from the file source and the recorder mechanism includes the one or more accessed files in the record.

In a particular embodiment, the minimisation profile identifies one or more files required to support a required functionality of a computer system and the method further comprises operating the computer system that maintains the record in accordance with the required functionality.

The required functionality is the functionality that is required of the computer system. That is to say, it enables the computer system to support one or more operations that the computer system is required to perform when in use. Thus, operating the computer system in accordance with the required functionality suitably involves the computer system performing one or more operations, the one or more operations being the operations that the computer system is required to perform in use. Operating the computer system in this way can be considered as exercising the computer system.

An operation is any suitable operation for which a computer system accesses one or more files. Examples of activities which involve the computer performing operations that typically involve the use or access of files include booting the computer system; installing, updating or running application software, for example a web server application; running a backup procedure; and using direct operating system or operating environment commands.

Suitably, during operation of the computer system, the computer system accesses one or more files from the file source and identifies the one or more accessed files in the record so that the record includes a record of the files required to support the required functionality.

It will be appreciated that the file source can be considered as comprising a set of files which support a full functionality and the files that are identified in the record can be considered as a subset of the set of files which support the required functionality.

Suitably, determining the minimisation profile can be by processing or analysing the record. For example, this can be simply achieved by outputting the record, following optional re-formatting.

In a particular embodiment, the method comprises:
analysing the record; and
including a file identifier in the minimisation profile for each file identified in the record.

In one embodiment, the minimisation profile identifies one or more packages necessary to support a required functionality, a package comprising one or more files, and the method further comprises:
analysing the record;
identifying a package to which a file belongs for each file of the record; and
including a package identifier in the minimisation profile for each identified package.

Files are grouped into packages for several operating systems and operating environments, for example the Solaris Operating Environment. Minimising to the package level rather than the file level, enables existing programs such as package management tools to still be used.

In a particular embodiment, the method further comprises decoding the record of files to identify each file that has been accessed by the computer system that maintains the record. Decoding the record may be useful if the record is encoded as may be the case if the method is performed using an existing apparatus.

In an embodiment the record is in the form of a file store of the computer system that maintains the record. Suitably, the file store is for storing one or more files accessed from the file source by the computer system and the computer system comprises a recorder mechanism for copying a file into the file store on the condition that the file is accessed from the file source by the computer system. In a particular embodiment the recorder mechanism uses a cache file system.

The file store may be any suitable store which can store files. In a particular embodiment the file store is configured on the hard disk of the computer system. In other embodiments the file store could be on any suitable computer usable medium, for example in solid state memory.

The file source may be any suitable file source from which the computer system can access files. The file source can be considered as a file source of interest or a file source comprising files to be minimised. In a particular embodiment the file source is provided on the hard disk of a server. In other embodiments the file source could be on any suitable computer usable medium, for example a compact disk.

In a particular embodiment the file source comprises one or more files of an operating system or operating environment. Producing a minimisation profile for an operating system or operating environment is useful because it is often these files which are used to obtain unauthorised access to a computer system. That is to say, minimising operating system or operating environment files reduces the number of potential security vulnerabilities.

Nevertheless, the file source can comprise one or more of the files of an application and a minimisation profile for application files can be produced. Producing a minimisation profile for an application can be useful similarly to reduce the number of potential security vulnerabilities and/or indeed to simply avoid wasting storage capacity.

Thus, it will be appreciated that the minimisation profile identifies one or more files for configuring a computer system and these files can be any suitable computer files.

All of the files that are accessible by the computer system that maintains the record may be provided from the file source. For example, the file source may comprise all application files and operating environment files for the computer system. Optionally, only the files to be minimised may be provided from the file source and other files may be provided from an additional file source.

Suitably, in a particular embodiment an additional file source comprising files accessible by the computer system that maintains the record is provided and the computer system is configured so that one or more files that are accessed from the additional file source by the computer system are not identified in the record.

Such an arrangement provides an improved method for producing a minimisation profile since only those files that are to be minimised can be provided in the file source and other files that are required by the computer system but which are not to minimised can be provided in the additional file source.

In a further embodiment an operator client is provided as a client of the computer system that maintains the record, the operator client being for operating the computer system in accordance with the required functionality of a computer system. The latter computer system can be the computer system that maintains the record or another computer system.

Thus, the computer system that maintains the record acts as a server to the operator client and the computer system can be operated or exercised as a server. It will be appreciated that this is useful for producing a minimisation profile for a server computer system.

In a particular embodiment the operator client is configured on a separate computer system to the computer system that maintains the record.

In one embodiment a server is provided for providing the file source for the computer system.

Those skilled in the art will appreciate that the server itself could be configured on the computer system that maintains the record, for example as a server application. In a particular embodiment the server is configured on a separate computer system to the computer system. Similarly, the operator client could be configured on the computer system as a client application. In a particular embodiment the operator client is configured on a separate computer system to the computer system. In one embodiment the operator client is configured on the same computer system as the server.

The server is a remote file server and the computer system that maintains the record is a client of the remote file server in a particular embodiment.

Suitably, in one embodiment the record is in the form of a file store of the computer system that maintains the record, the file store is for storing one or more files accessed from the file source by the computer system, the computer system comprises a recorder mechanism for copying a file into the file store on the condition that the file is accessed from the file source by the computer and the recorder mechanism uses a cache file system.

Using a cache file system for maintaining the record is useful as a cache file system can store a copy of an accessed file.

In one embodiment the recorder mechanism is provided by AutoClient from Sun Microsystems, Inc. By using AutoClient, an existing apparatus may be used to perform the methods described herein.

In one embodiment the minimisation profile identifies the one or more files necessary to support a required functionality of a target computer system. The computer system that maintains the record is a test computer system. The method comprises operating the test computer system in accordance with a required functionality of the target computer system. However, it will be appreciated that the computer system that maintains the record may be operated to provide a minimisation profile for itself. That is to say, in some embodiments the test computer system and the target computer system are one and the same.

By using a test computer system, a minimisation profile can be produced for a target computer system without having to re-configure the target computer system itself.

Viewed from another aspect the present invention provides an apparatus for producing a minimisation profile which identifies one or more files necessary to support a required functionality of a computer system. The apparatus comprises a computer system configured to maintain a record of one or more files accessed from a file source by the computer system and an operator client as a client of the computer system for operating the computer system in accordance with the required functionality.

The apparatus may comprise features as already set out above, these features having the advantages also already set out above.

It will be appreciated that the minimisation profile can be considered as identifying a minimised file set or a set of minimised files which can be used, for example by a systems engineer, to configure a computer system to support a required functionality.

Viewed from another aspect the present invention provides a minimised set of files identified by a minimisation profile obtained by a method as defined herein and/or from an apparatus as described herein.

Viewed from another aspect the present invention provides a computer system configured with a minimised set of files identified by a minimisation profile obtained by a method as defined herein and/or from an apparatus as defined herein.

In a particular embodiment the computer system is configured as a server.

Viewed from another aspect the present invention provides a method of configuring a computer system with a minimised set of files, the method comprising configuring the computer system with a minimised set of files identified by a minimisation profile obtained by a method as defined herein and/or from an apparatus as defined herein.

Viewed from another aspect the present invention provides a minimisation profile obtained by a method as defined herein and/or from an apparatus as defined herein. It will be appreciated that a minimisation profile is a product directly obtained by the methods or processes defined herein

The recorder mechanisms of embodiments of the present invention may be implemented in software, firmware, hardware or any combination thereof.

The file source and/or file store of embodiments of the present invention may be implemented using any suitable computer usable medium, for example a magnetic disk including a hard disk, a magnetic tape, solid state memory, a magneto-optical disk, an optical readable and/or writable disk, a compact disk or a digital versatile disk. The file source may provide files using any suitable computer usable carriers, for example a radio frequency signal, an optical signal and an electronic signal.

Particular embodiments of the present invention will be described hereinafter, by way of example only, with reference to the accompanying drawings in which like reference signs relate to like elements and in which:
Figure 1 is a schematic representation of a computer system;
Figure 2 is a schematic representation of a computer system for use in an embodiment of the present invention;
Figure 3 is a flow diagram illustrating the method steps of an embodiment of the present invention;
Figure 4 illustrates a minimisation profile of an embodiment of the present invention;
Figures 5 is a schematic representation of an apparatus for use in an embodiment of the present invention; and
Figures 6 and 7 are schematic representations of apparatus constructed in accordance with embodiments of the present invention.

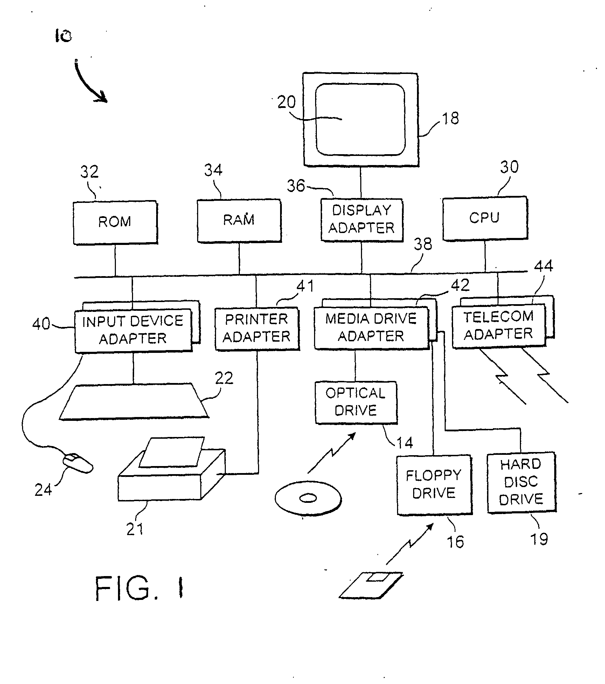

Figure 1 is a schematic representation of a computer system 10. The computer system 10 comprises various data processing resources such as a processor (CPU) 30 coupled to a bus structure 38. Also connected to the bus structure 38 are further data processing resources such as read only memory 32 and random access memory 34. A display adapter 36 connects a display device 18 having screen 20 to the bus structure 38. One or more user-input device adapters 40 connect the user-input devices, including the keyboard 22 and mouse 24 to the bus structure 38. An adapter 41 for the connection of the printer 21 may also be provided. One or more media drive adapters 42 can be provided for connecting the media drives, for example the optical disk drive 14, the floppy disk drive 16 and hard disk drive 19, to the bus structure 38. One or more telecommunications adapters 44 can be provided thereby providing processing resource interface means for connecting the computer system to one or more networks or to other computer systems or devices. The communications adapters 44 could include a local area network adapter, a modem and/or ISDN terminal adapter, or serial or parallel port adapter etc, as required.

The computer system 10 can be configured with files that may be stored in one or more of the hard disk, a floppy disk in the floppy disk drive 16 and an optical disk in the optical disk drive 14, for example, or dynamically loaded via adapter 44. In operation the processor 30 can access one or more of these files. The results of the processing performed may be displayed to a user via the display adapter 36 and display device 18. User inputs for controlling the operation of the computer system 10 may be received via the user-input device adapters 40 from the user-input devices.

It will be appreciated that the architecture of a computer system could vary considerably and Figure 1 is only one example. For example, all communications with the computer system could be performed over a network from another computer system, or via a serial line connection from a terminal. Optionally there could be more than one processor 30 in the computer system.

Files may be any suitable computer usable files including data files and executable files (computer programs) for conveying various information or implementing various functions. Files can be formatted in a variety of different formats and can be written in a variety of different computer languages. Files can be stored and/or supplied on computer usable media, for example on a compact disk, a digital versatile disk and/or a floppy disks and then stored on a hard disk, for example. A file may also be embodied as an electronic signal supplied on a computer usable carrier, for example over a telecommunications network. Examples of suitable carriers include a radio frequency signal, an optical signal and an electronic signal.

It will be appreciated that a file is a computer usable entity that is capable of being manipulated on its own, for example an individual file can be moved or copied from one computer usable medium to another computer usable medium via a computer usable carrier.

It will also be appreciated that a computer system as used herein is a data processing apparatus that uses files. Such a data processing apparatus could be embodied in a variety of forms, for example as a handheld device such as a mobile phone or personal digital assistant.

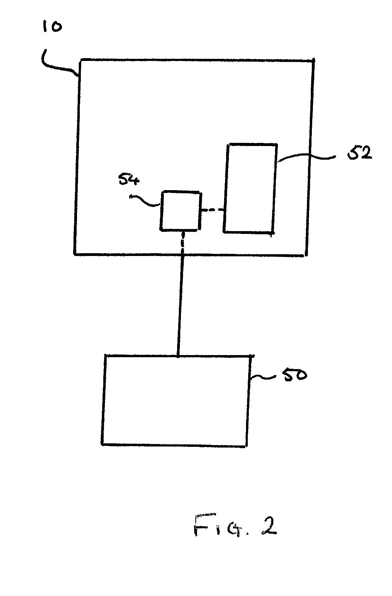

Figure 2 shows a schematic representation of a computer system 10, which could have an architecture similar to that of computer system 10 of Figure 1, for use in an embodiment of the present invention. File source 50 is provided which comprises files that are accessible by the computer system 10. The computer system 10 is configured to maintain a record 52 of files that are accessed by the computer system 10 during operation. The computer system 10 comprises a recorder mechanism 54 for identifying a file in the record 52 on the condition that the file is accessed from the file source 50 by the computer system 10.

The file source 50 may be any suitable file source from which the computer system 10 can access files and the record 52 may be any suitable computer-maintained record which can be used to identify the one or more files that the computer accesses during operation.

During operation of the computer system, the computer system accesses one or more files from the file source and the recorder mechanism 54 identifies the one or more accessed files in the record 52.

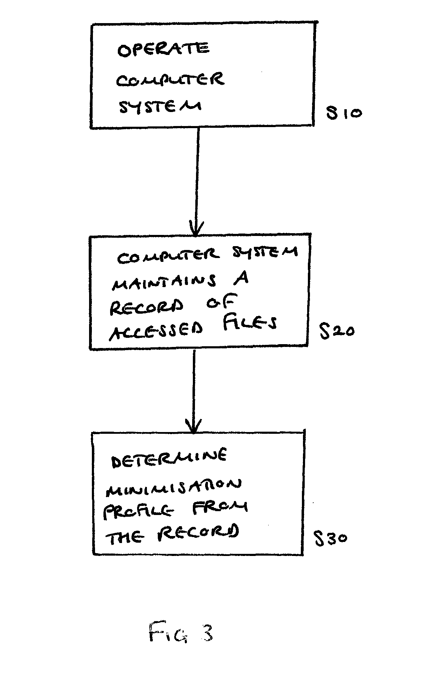

Figure 3 is a flow diagram illustrating the method steps of an embodiment of the present invention. Referring to Figure 3, at step S 10, the computer system is operated so that the computer system performs one or more operations for which it accesses one or more files. During operation the computer system maintains the record of accessed files at step S20. At step S30, a minimisation profile is determined from the record.

Thus, the file source 50 comprises files to be minimised which can be considered as a set of files required to support a full functionality. The computer system 10 is operated or exercised in accordance with a required functionality and during operation only those files that are needed to support the required functionality are accessed and in turn only these files are identified in the record 52 by the recorder mechanism 54.

The files included or identified in the record 52 are therefore the files which support the required functionality and the record 52 can be used to determine a minimisation profile which identifies these files.

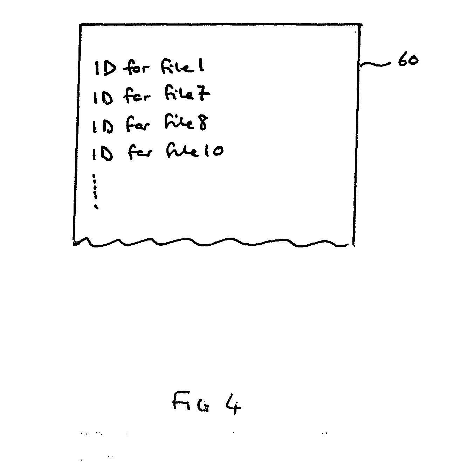

For example if the file source comprises files 1 to 100 inclusive, and files 1, 7, 8 and 10 are accessed during operation of the computer system 10, then these files will be identified in the record 52. The minimisation profile will identify these files, for example by including an identifier or ID for file 1, an ID for file 7, an ID for file 8 and an ID for file 10 respectively. A schematic representation of a minimisation profile 60 is given in Figure 4.

The minimisation profile is determined by processing or analysing the record, for example by optionally re-formatting and outputting the record. In one embodiment, determining the minimisation profile comprises analysing the record and including a file identifier in the minimisation profile for each file identified in the record.

A systems or service engineer can use a minimisation profile to configure a computer system with minimised set of files identified by a minimisation profile. The minimised set of files can be stored on a portable computer system such as a lap top computer system and the engineer can connect the portable computer system to a customer computer system and configure the customer computer system with the minimised set of files. Optionally, the minimisation profile and/or the minimised set of files can be supplied to the customer and the customer can configure their own computer system.

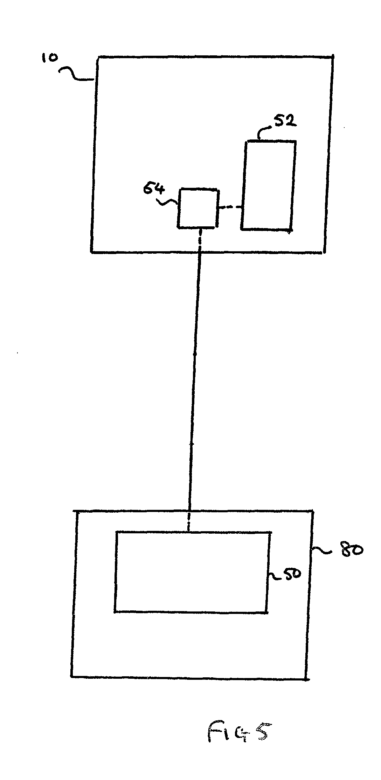

Figure 5 is a schematic illustration of an apparatus for use in an embodiment of the present invention. The apparatus comprises a computer system 10 corresponding to the computer system 10 of Figure 2, being configured to maintain record 52 and comprising recorder mechanism 54.

In the apparatus of Figure 5, a server computer system 80 serves as a server to computer system 10. Server computer system 80 could have an architecture similar to that of the computer system 10 of Figure 1 and is configured with the file source 50 for providing files for the computer system 10. The file source is configured on the hard disk of the server computer system.

Computer system 10 and server computer system 80 of Figure 5 are connected through respective telecommunications adapters such as telecommunications adapter 44 of the computer system 10 of Figure 1 and can be connected directly, through a hub or via a network.

In operation, computer system 10 performs one or more operations which involve making requests to access one or more files from server computer system 80. In response to such a request, server computer system 80 provides access to one or more files from file source 50 to the computer system 10.

During operation of the computer system 10, the recorder mechanism 54 includes or identifies one or more files in the record 52 on the condition that the file is accessed from the file source by the computer system 10.

The files included or identified in the record 52 are therefore the files which are necessary to support the one or more operations performed by the computer system 10 and the record can be processed or analysed to determine the corresponding minimisation profile that identifies these files.

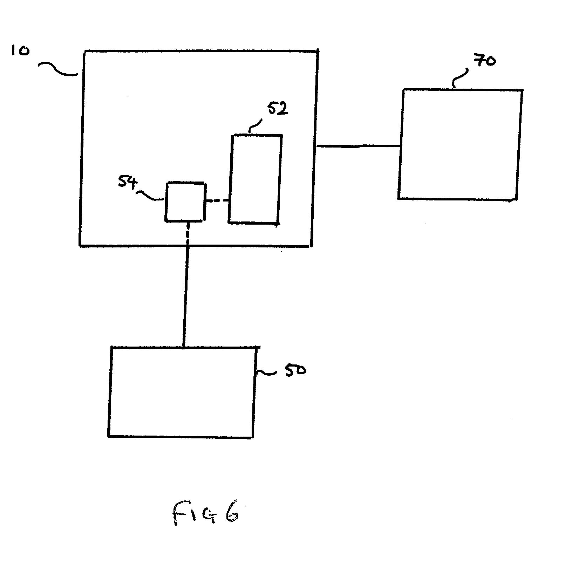

Figure 6 is a schematic representation of an apparatus constructed in accordance with an embodiment of the present invention. Computer system 10 corresponds to the computer system 10 of Figure 2, being configured to maintain record 52, comprising recorder mechanism 54 and having access to file source 50.

In the apparatus of Figure 6, an operator client computer system 70 is provided as a client of the computer system 10 for operating the computer system 10 in accordance with a required functionality. Thus, it will be appreciated that computer system 10 acts as a server to operator client computer system 70

Operator client computer system 70 could have an architecture similar to that of the computer system 10 of Figure 1.

Computer system 10 and operator client computer system 70 of Figure 6 are connected through respective telecommunications adapters such as telecommunications adapter 44 of the computer system 10 of Figure 1 and can be connected directly, through a hub or via a network, for example.

File source 50 is configured with a set of files to be minimised.

In operation, operator client computer system 70 is used to make one or more client requests to computer system 10. In response to a request from the operator client computer system 70, the computer system 10 performs one or more operations which involve accessing the required files from the file source 50.

A range of requests corresponding to a required functionality can be made so that the computer system 10 performs a corresponding range of operations. These requests can include requests to install, update or run application software on the computer system 10; requests to run a backup procedure; and direct operating system or operating environment commands; for example. Corresponding operations are performed by the computer system 10 and corresponding files accessed from the file source 50 are included in the record 52. A minimisation profile to support the required functionality is then obtained.

During operation of the computer system 10, the recorder mechanism 54 identifies one or more files in the record 52 on the condition that the file is accessed from the file source by the computer system 10.

The files included in the record 52 are therefore the files which are required to support the required functionality and the record can be processed or analysed to determine the corresponding minimisation profile that identifies these files that are required to support the required functionality.

All of the files that are accessible by the computer system may be provided by the file source, for example all application files and operating environment files. Optionally, only the files to be minimised may be provided from the file source and other files may be provided by an additional file source (not shown). Accordingly, the computer system 10 is configured so that files accessed from the additional file source are not included in the record.

In one embodiment the file source comprises operating environment files and the additional file source comprises application files.

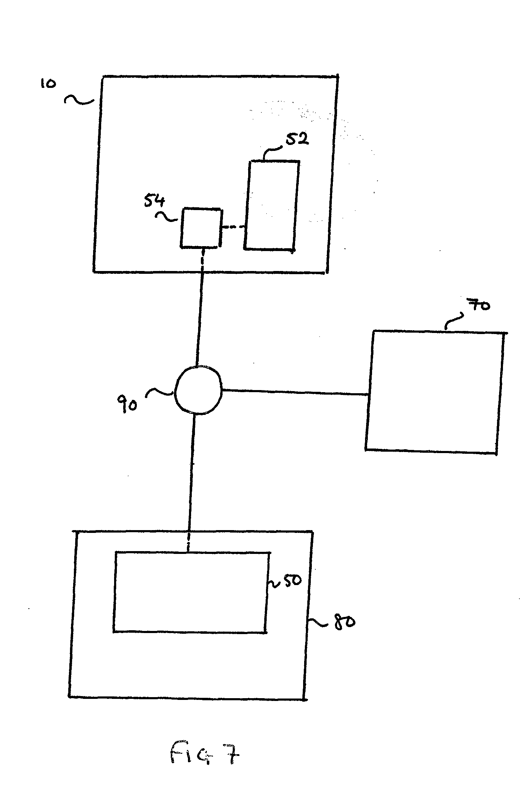

Figure 7 is a schematic representation of an apparatus constructed in accordance with an embodiment of the present invention. The apparatus comprises a computer system 10 configured to maintain record 52 and comprising recorder mechanism 54, server computer system 80 configured with file source 50 and operator client computer system 70, all as described with reference to the preceding Figures.

In the apparatus of Figure 7, the computer system 10, server computer system 80 and operator client computer system 70 are connected through hub 90. Record 52 is in the form of a file store for storing files accessed from the file source by the computer system 10 and the file store is configured on the hard disk of computer system 10. The recorder mechanism 54 is configured to copy a file into the file store on the condition that the file is accessed from the file source 50 by the computer system 10.

Server computer system 80 serves as a server to computer system 10 which in turn serves as a server to operator client computer system 70.

File source 50 is configured with a set of files to be minimised such as a set of operating environment files. These files can be considered as files required to support a full functionality.

In operation, operator client is used to exercise a required functionality on the computer system 10 by being operated to make one or more requests to the computer system 10. In response to a request, the computer system 10 performs one or more operations which involve making requests to access one or more files from server computer system 80. In response to such a request, server computer system 80 provides a file from file source 50 to the computer system 10.

Examples of requests and corresponding operations have been described with reference to Figure 6.

During operation of the computer system 10, the recorder mechanism 54 copies one or more files into the file store (forming the record 52) on the condition that the file is accessed from the file source by the computer system 10.

The file store therefore contains all of the files that are required to support the required functionality. The file store can be processed or analysed to produce a corresponding minimisation profile.

The analysis can be by simply outputting a list of the contents of the file store. Optionally, files from the file store can be copied, for example onto a portable computer system, to provide a minimised set of files. The minimisation profile or minimised set of files can then be used to configure a computer system such as a customer computer system.

In the preceding embodiments, the computer system 10 may be implemented as a test computer system which can be can be configured as and operated in accordance with a required functionality of a target computer system to produce a minimisation profile for the target computer system.

The test computer system can be configured as the target computer system by using the same version of the operating system or operating environment and the same range of applications.

Also, in the preceding embodiments, the recorder mechanism may use a cache file system in combination with a remote file system on server computer system 80 forming the file source 50.

In addition, in the preceding embodiments, files can be minimised at the package level rather than the file level. Accordingly, the determination of the minimisation profile comprises analysing the record, identifying a package to which the file belongs for each file of the record and including a package identifier for each identified package in the minimisation profile. The minimisation profile therefore identifies one or more packages.

Suitably, the identifying can be done by cross referencing the record against a list of files indexed by package identifier, for example package name.

A particular implementation of an apparatus and method in accordance with an embodiment of the present invention will now be described with reference to Figure 7.

In the particular implementation, server computer system 80 serves as a remote file server to the computer system 10 and provides operating environment files for the computer system 10. More particularly, the server computer system 80 serves as a remote file system or network file system for the computer system 10. In such a system, files are accessed by computer system 10 from the server computer system 80. The remote file system forms the file source 50.

In a remote file system, operating system or operating environment files are served from a centralised server. However, due to problems with network bandwidth service from the centralised server can be slow. The Solstice AutoClient product was introduced in Solaris 2.6 from Sun MicroSystems, Inc to address these network bandwidth problems for the Sun Network File System (NFS).

AutoClient uses a cache file system (cachefs) on the hard disk of a client computer system to maintain a cache of accessed files. At install time, a client with AutoClient can boot from a centralised server and access files. Files are copied into the AutoClient cache on the client if and only if they are required (i.e. accessed). In other words files, are copied into the cache on the condition that the file is accessed from the remote file system by the client.

In the particular implementation, the cache of AutoClient is used to store a copy of the one or more files that are accessed by computer system 10 during operation and to therefore provide the file store forming record 52. It will be appreciated that AutoClient is also used to provide the recorder mechanism 54 for copying a file into the record 52 on the condition that the file is accessed from the file source 50 by the computer system 10. Thus, in the particular implementation recorder mechanism 54 is implemented as software.

The systems or hosts used for the particular implementation will now be described. The implementation uses AutoClient and the Solaris Operating Environment from Sun Microsystems, Inc. Information on Solaris, including an explanation of the technical terminology used below, can be found in "Solaris 8 System Administrator Collection" and "Solstice AutoClient 2.1 Administration Guide", Sun Part No. 805-3167 (1997, Sun Microsystems, Inc., Palo Alto, CA, USA), available online at http://docs.sun.com.

In the particular implementation, the following system is used for server computer system 80:
- System:: a Fujitsu S-4510 laptop (128 MB RAM);
- Operating Environment:: Solaris 8 (IA) 10/01 (SUNWCXaII); and
- Hard disk:: 2GB /, 400MB /var, 3GB /export.

The figures for the hard disk are for the partitioning of 2GB for the root file system (represented as "/"), 400MB for the /var file system and 3GB for the /export file system.

The server computer system 80 is configured with AutoClient 3.0.1 by installing the software into the /opt directory of the root file system.

The remote file system is then set up on the server computer system 80 by using the achostmod(1M) configuration command to configure the system as an OS server for Solaris 8 (Scalable Processor Architecture (SPARC)) 2/02 (full distribution + Other Equipment Manufacturer (OEM)).

The remote file system is made available to the test computer system 10. This is done by configuring the server computer system 80 with a sun4u architecture AutoClient service area under the /export directory and by using the achostadd(1M) command.

It is desirable for certain customisations to be made to the AutoClient root before network boot. In particular, the client root can be appropriately "hardened" using the Solaris Security Toolkit (JASS) scripts to prevent unwanted service startups at boot time. Application-specific customisations can also be made at this stage.

The following system is used for computer system 10:
- System:: Sun Ultra-1/170 (128MB RAM); and
- Hard disk:: 2 x 2GB internal disks.

The computer system 10 is configured with the recorder mechanism 54 which maintains record 52 by using the OpenBoot Prompt (OBP) command: "boot net" to configure the computer system 10 with AutoClient. The recorder mechanism 54 and indeed record 52 are thus provided by AutoClient in the particular implementation.

A system of similar specification to computer system 10 above is used for operator client computer system 70. In another implementation computer system 80 doubled as operator client computer system 70.

With AutoClient configured on computer system 10, the next step is to fully operate or "exercise" one or more applications on the computer system 10. This is done by accessing computer system 10 from operator client computer system 70. The exercising can take the form of running through the operations of a required functionality of the target computer system, for example running through an acceptance test plan for the target computer system and can include testing all anticipated management steps.

If scheduling programs are in use, such as at(1) or cron(1M), then it is desirable that the exercising is for a sufficient time to allow at least one occurrence or each to be scheduled. Any other scheduling programs, for example weekly cron jobs can be run manually if they form part of the required functionality.

After exercising or operating the computer system 10 in accordance with the required functionality, the computer system 10 will have record 52 in the form of the cache of a cache file system (cachets) populated with the files that have been accessed during operation.

Listing the contents of the cachefs file system of computer system 10 is then performed. In the particular implementation, filenames in the cache are encoded in hexadecimal. Listing the cache contents is done by recursing the cache directories and converting or decoding the hexadecimal filenames to decimal filenames.

In the particular implementation, the listing is done by using a Bourne shell script which invokes the following programs: /usr/bin/awk, /usr/bin/dc, /usr/bin/find, /usr/bin/sed, /usr/bin/tr and /usr/bin/xargs.

All of the programs invoked using the Bourne shell script, with the exception of dc, commonly occur in the /etc/init.d/ startup scripts and because of this it is to be expected that these programs will reside on a minimised system. Thus, the process of listing the contents of the cache or record 52 is done in a near passive way as possible without including extra files in the cache or record 52 itself. The dc program is not considered to have any security vulnerabilities.

The list of the cache contents itself can be used as a minimisation profile. However, this list identifies files and it may be desired to produce a minimisation profile identifying packages.

The filenames of the cache when decoded to decimal correspond to inode numbers. On the server computer system 80, the files of the remote file system, stored in the AutoClient service area /export directory, are identified by these inode numbers.

The list of cached inode numbers are copied onto the server computer system 80 by using a statically linked scp program. A list of the inode numbers in the service area file system of server computer system 80 is generated using the ncheck(1M) command. The list of inode numbers from the cache is then cross-referenced against the list of inode numbers in the service area to produce a list of pathnames of files cached by the computer system 10.

The preceding steps are performed for the file systems that are cached, which for a standard AutoClient are the / and /usr file systems, corresponding the root and service areas respectively.

To produce a minimisation profile identifying one or more packages, the list of inodes numbers from the cache can be cross-referenced against a list of filenames indexed by package name. In the particular implementation, a var/sadm/install/contents file is used which is not necessarily the same as the contents file of server computer system 80. The contents file should correspond to a "full+OEM" distribution, or more strictly a "full+OEM+apps" for the operating system release and architecture of computer system 10.

A list of packages which have been cached by computer system 10 can therefore be produced (or indeed a list of packages which have not been used). This list can be used as a minimisation profile, for with a security toolkit such as the Solaris Security toolkit, also known as the JumpStart Architecture and Security Scripts (JASS) toolkit which provides a mechanism for minimising a Solaris Operating Environment system.

Although particular embodiments of the invention have been described, it will be appreciated that various additions, modifications and alternatives may be made within the scope of the invention.

For example, the file source may be a compact disk and a minimisation profile for application files may be produced.

In relation to the particular implementation, other cached file systems, for example /opt may be minimised. A statically linked program or binary could be created to list the contents of the cachefs file system. Alternatively, the computer system 10 could be run as an AutoClient in "disconnectable" mode, it could be disconnected from the network, the file systems could be synchronised, another device booted off and the contents of the quiescent cache listed.

Further, embodiments in accordance with the present invention can be implemented on computer systems running a variety of operating systems/environments. For example, embodiments in accordance with the present invention can be implemented on systems using UNIX operating systems/environments other than Solaris such as cachefs for Linux, Coda and InterMezzo (a follow-on from Coda).

Particular and preferred aspects of the invention are set out in the accompanying independent claims. Combinations of features from the dependent and/or independent claims may be combined as appropriate and not merely as set out in the claims.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method for producing a minimisation profile (60), wherein a computer system (10) and a file source (50) comprising files accessible by the computer system (10) are provided and the computer system (10) maintains a record (52) of one or more files that are accessed from the file source (50) by the computer system (10) during operation, the method comprising:
determining the minimisation profile (60) from the record (52).

2. A method according to claim 1, wherein the minimisation profile (60) identifies one or more files necessary to support a required functionality of a computer system, the method further comprising:
operating the computer system (10) that maintains the record (52) in accordance with the required functionality.

3. A method according to claim 1 or claim 2, the method comprising:
analysing the record (52); and
including a file identifier in the minimisation profile (60) for each file of the record (52).

4. A method according to claim 1 or claim 2, wherein the minimisation profile (60) identifies one or more packages required to support a required functionality, a package comprising one or more files, the method further comprising:
analysing the record (52);
identifying a package to which a file belongs for each file of the record (52); and
including a package identifier in the minimisation profile (60) for each identified package.

5. A method according to any preceding claim, the method further comprising:
decoding the record (52) to identify each file that has been accessed by the computer system (10) that maintains the record (52).

6. A method according to any preceding claim, wherein the computer system (10) that maintains the record (52) comprises a recorder mechanism (54) for identifying a file in the record on the condition that the file is accessed from the file source (50) by said computer system (10).

7. A method according to any preceding claim wherein the record (52) is in the form of a file store of the computer system (10) that maintains the record (10), the file store for storing one or more files accessed from the file source (50) by said computer system (10), and said computer system (10) comprises a recorder mechanism (54) for copying a file into the file store on the condition that the file is accessed from the file source (50) by said computer system (10).

8. A method according to any preceding claim, wherein the file source (50) comprises one or more files of an operating system or operating environment.

9. A method according to any preceding claim, wherein an additional file source comprising files accessible by the computer system (10) that maintains the record (52) is provided and said computer system (10) is configured so that one or more files that are accessed from the additional file source by said computer system (10) are not included in the record.

10. A method according to any preceding claim, wherein an operator client (70) is provided as a client of the computer system (10) that maintains the record (52), the operator client (70) being for operating said computer system (10) in accordance with the required functionality of a computer system.

11. A method according to claim 10, wherein the operator client (70) is configured on a separate computer system to the computer system (10) that maintains the record (52).

12. A method according to any preceding claim, wherein a server (80) is provided for providing the file source (50) for the computer system (10) that maintains the record (52).

13. A method according to claim 12, wherein the server (80) is a remote file server and the computer system (10) that maintains the record (52) is a client of the remote file server.

14. A method according to any preceding claim, wherein the record (52) is in the form of a file store of the computer system (10) that maintains the record (52) , the file store being for storing one or more files accessed from the file source (50) by said computer system (10), said computer system (10) comprises a recorder mechanism (54) for copying the file into the file store on the condition that the file is accessed from the file source (50) by said computer system (10) and the recorder mechanism (54) uses a cache file system.

15. A method according to claim 14, wherein the recorder mechanism (54) is provided by AutoClient from Sun Microsystems, Inc.

16. A method according to any preceding claim, wherein the minimisation profile (60) identifies the one or more files required to support a required functionality of a target computer system, and the computer system (10) that maintains the record is a test computer system, the method comprising:
operating the test computer system in accordance with the required functionality of the target computer system.

17. Use of a computer system (10) configured to generate a record (52) of files that are accessed by the computer system (10) during operation to produce a minimisation profile (60).

18. An apparatus for producing a minimisation profile (60) identifying one or more files necessary to support a required functionality of a computer system, the apparatus comprising:
a computer system (10) configured to maintain a record (52) of one or more files accessed from a file source (50) by said computer system; and
an operator client (70) as a client of said computer system (10) for operating said computer system (10) in accordance with the required functionality.

19. An apparatus according to claim 18, wherein the computer system (10) that is configured to maintain the record (52) comprises a recorder mechanism (54) for identifying a file in the record (52) on the condition that the file is accessed from the file source (50) by said computer system (10).

20. An apparatus according to claim 18 or claim 19, wherein the record (52) is in the form of a file store of the computer system (10) that is configured to maintain the record (52), the file store for storing one or more files accessed from the file source (50) by said computer system (10), and said computer system (10) comprises a recorder mechanism (54) for copying a file into the file store on the condition that the file is accessed from the file source (50) by said computer system (10).

21. An apparatus according to any one of claims 18 to 20, wherein the file source (50) comprises one or more files of an operating system or operating environment.

22. An apparatus according to any one of claims 18 to 21, further comprising an additional file source comprising additional files accessible by the computer system (10) that is configured to maintain the record (52), wherein said computer system (10) is configured so that one or more files that are accessed from the additional file source by said computer system (10) are not identified in the record (52).

23. An apparatus according to any one of claims 18 to 22, wherein the operator client (70) is configured on a separate computer system to the computer system (10) that is configured to maintain the record (52).

24. An apparatus according to any one of claims 18 to 23, further comprising a server (80) for providing the file source (50) for the computer system (10) that is configured to maintain the record (52).

25. An apparatus according to claim 24, wherein the server (80) is a remote file server and the computer system (10) that is configured to maintain the record (52) is a client of the remote file server.

26. An apparatus according to any one of claims 18 to 25, wherein the record (52) is in the form of a file store of the computer system (10) that is configured to maintain the record (52), the file store for storing one or more files accessed from the file source (50) by said computer system (10), said computer system (10) comprises a recorder mechanism (54) for copying the file into the file store on the condition that the file is accessed from the file source (50) by said computer system (10) and the recorder mechanism (54) uses a cache file system.

27. An apparatus according to claim 26, wherein the recorder mechanism (54) is provided by AutoClient from Sun Microsystems, Inc.

28. An apparatus according to any one of claims 18 to 27, wherein the minimisation profile (60) identifies the one or more files required to support a required functionality of a target computer system, the computer system (10) that is configured to maintain the record (52) is a test computer system, and the operator client (70) is for operating the test computer system in accordance with the required functionality of the target computer system.

29. A computer system configured with a set of files identified by a minimisation profile (60) obtained by a method according to any one of claims 1 to 17 and/or from an apparatus according to any one of claims 18 to 28.

30. A computer system according to claim 29 wherein the computer system is configured as a server.

31. A method of configuring a computer system with a set of files, the method comprising:
configuring the computer system with a set of files identified by a minimisation profile (60) obtained by a method of any one of claims 1 to 17 and/or from an apparatus of any one of claims 18 to 28.

32. A minimisation profile (60) obtained by a method of any one of claims 1 to 17 and/or from an apparatus of any one of claims 18 to 28.

33. A set of files identified by a minimisation profile (60) obtained by a method of any one of claims 1 to 17 and/or from an apparatus of any one of claims 18 to 28.
